# EUROPEAN PATENT APPLICATION

(11) **EP 1 961 947 A1**
(43) Date of publication of application: **27.08.2008**
(21) Application number: 07250708.0
(22) Date of filing: 20.02.2007
(51) Int. Cl.: F02M 37/22

(54) **Housing for a fuel filter**

(71) Applicant: Delphi Technologies, Inc., Troy, Michigan 48007 (US)
(72) Inventor: Sumskis, Fabrice, 3932 Mondercange (LU)
(74) Representative: Waller, Stephen

(57) **Abstract**

A housing for a fuel filter for filtering fuel flowing to the fuel system of an internal combustion engine, the housing being made from an electrically non-conductive material and comprising a plurality of walls defining an internal chamber for receiving a filter element and having an inlet and an outlet, wherein at least a side wall of the housing is provided on at least a substantial portion of its inner surfaces with an electrically conductive material.

## Description

The present invention relates to a housing for a fuel filter for filtering fuel flowing to the fuel system of an internal combustion engine.

The fuel system of a vehicle is typically provided with a fuel filter for filtering the fuel to be supplied from a fuel pump to fuel injectors. The fuel filter comprising a filter housing, typically formed from a polymeric material such as Nylon 12, in which a pleated paper filter element is contained, the housing having an inlet and an outlet, the filter element being arranged within the housing such that fuel must pass through the filter element as it passes through the housing from the inlet to the outlet. It is preferred to form the housing from a plastic material as such materials are light in weight and can be readily moulded to the desired shape. However, such materials are typically electrically non-conductive.

When the fuel passes through the filter element, static electricity can be generated, causing an electrostatic charge to build up on the inner surfaces of the electrically non-conductive filter housing. When the electrostatic charge discharges from the filter housing to adjacent metal components, small holes are formed in the housing which can lead to the filter housing becoming cracked due to a discharge impact of the static electricity through the housing.

To cope with this problem, it has been proposed to prevent the electrostatic discharge by connecting an earth wire to the outside of the filter housing to release the static charge. However, difficulty has been encountered in providing a conductive path between the inner surfaces of the housing in contact with the fuel and the earth wire without providing a potential leak path through the walls of the housing and requiring time consuming additional manufacturing steps for the formation of such search contacts after moulding the housing. One proposed solution has been to form the housing from an electrically conductive material, e.g. a base Nylon 12 material to which is added stainless steel fibres as disclosed in US 5,076,920. However, such solution considerably increases the cost of the material and thus the cost of the housing.

According to the present invention there is provided a housing for a fuel filter for filtering fuel flowing to the fuel system of an internal combustion engine, the housing being made from an electrically non-conductive material and comprising a plurality of walls defining an internal chamber for receiving a filter element and having an inlet and an outlet, wherein at least a side wall of the housing is provided on at least a substantial portion of its inner surfaces with an electrically conductive material.

Preferably said electrically conductive material comprises an electrically conductive mesh or braid.

In a preferred embodiment said housing is overmoulded over said electrically conductive mesh or braid such that said electrically conductive material is exposed to the chamber over at least a substantial portion of the inner surfaces of at least said side wall of the housing.

Preferably an external ground connection is provided on an outer surface region of the housing, said ground connection being electrically connected to said electrically conductive material.

The conductive material may comprise a metal, such as brass or stainless steel.

According to a further aspect of the present invention there is provided a method of manufacturing a housing for a fuel filter for filtering fuel flowing to the engine of a motor vehicle, the housing comprising a plurality of walls defining an internal chamber for receiving a filter element and having an inlet and an outlet, the method comprising the steps of locating a layer electrically conductive material over a core of a mould, overmoulding an electrically non-conductive material over said electrically conducting material to define at least a portion of the housing, whereby said electrically conducting material is exposed to the chamber over at least a portion of the inner surfaces of the housing.

Preferably the method includes the further step of forming said electrically conductive material into a braid or mesh body dimensioned to fit over said mould core before overmoulding said electrically non-conductive material over said electrically conductive material.

The method may comprise the further step of providing an electrical grounding connection on said electrically conductive material arranged to extend through said electrically non-conductive material for connection to a ground wire.

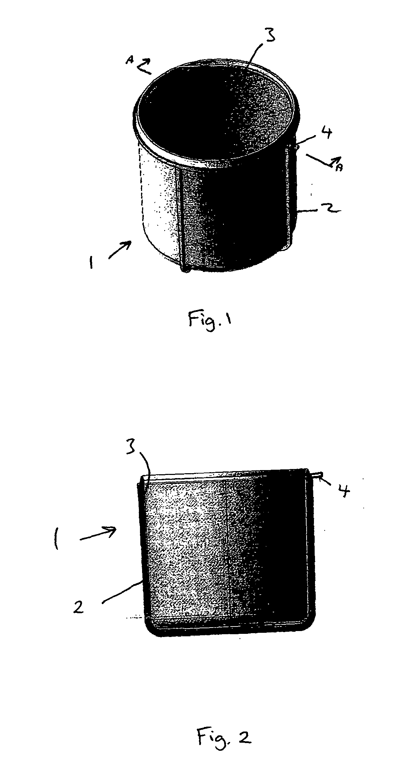

An embodiment of the present invention will now be described, by way of example only, with reference to the accompanying drawings, in which:-
Fig. 1 is a perspective view of a fuel filter housing according to an embodiment of the present invention;
Fig. 2 is a sectional view of the housing of Fig. 1 along line A-A;

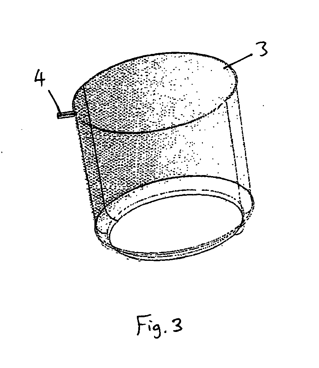

Fig. 3 is a perspective view of the electrically conducive mesh of the housing of Fig. 1 prior to overmoulding.

As illustrated in the drawings, a housing 1 for a fuel filter according to an embodiment of the present invention comprises a cup-like body 2 made of Nylon 12 or similar electrically non-conductive plastic material having a closed end and a substantially tubular side wall. A polyacetal material (POM) is considered to be suitable for the material of the housing 1, such material being particularly suited to injection moulding. An end cap (not shown) having inlet and outlet ports provided therein, is sealingly and releasably attachable to the open end of the cup-like body 2 to close the housing 1, whereby the housing 1 defines an internal chamber for receiving a conventional pleated paper filter element.

An electrically conductive material in the form of a mesh body 3 is provided on the inner surface of the side wall of the housing 1. The cup-like plastic body 2 is overmoulded over the mesh body 3, formed from an electrically conductive material such as brass or stainless steel, such that the mesh body 3 is exposed to fuel contained within the housing to form an electrically conductive inner surface on the housing. The mesh body 3 is provided with a grounding tab 4 extending through the side wall of the housing 1 for connection to a grounding wire to provide an electrically conductive path between the inner surface of the housing and a ground connection of the vehicle to prevent the build up of electrostatic charge on the inner surface of the housing.

The housing 1 is made by first placing the electrically conductive mesh body 3 on a core of a mould and then forming the housing 1 by overmoulding a plastic electrically non-conductive body 2 over the mesh body 3, such that the inner surfaces of the mesh body 3 are exposed to form an electrically conductive surface on the inner faces of the side wall of the housing 1. The grounding tab 4 is arranged to extend through the plastic material to provide a ground connection for the mesh body for connection to an earth connection of the vehicle.

Thus, all of the main areas of the housing that are in contact with the fuel are electrically connected to ground to effectively remove the electrostatic charge generated by the passage of fuel through the filter material. No further pin insertion or additional manufacturing steps are required after moulding the housing, leading to a cost and time saving in the manufacturing process. Standard plastic materials, such as a POM or Nylon 12, can be moulded to form the housing, rather than specific and costly electrically conductive mouldable materials. The direct contact between the fuel and the electrically conductive material improves the grounding efficiency of the housing.

Various modifications and variations to the described embodiment of the invention will be apparent to those skilled in the art without departing from the scope of the invention as defined in the appended claims. Although the invention has been described in connection with a specific preferred embodiment, it should be understood that the invention as claimed should not be unduly limited to such specific embodiment.

## Claims

1. A housing for a fuel filter for filtering fuel flowing to the fuel system of an internal combustion engine, the housing being made from an electrically non-conductive material and comprising a plurality of walls defining an internal chamber for receiving a filter element and having an inlet and an outlet, wherein at least a side wall of the housing is provided on at least a substantial portion of its inner surfaces with an electrically conductive material

2. A housing as claimed in claim 1, wherein said electrically conductive material comprises an electrically conductive mesh or braid.

3. A housing as claimed in claim 2, wherein said housing is overmoulded over said electrically conductive mesh or braid such that said electrically conductive material is exposed to the chamber over at least a substantial portion of the inner surfaces of at least said side wall of the housing.

4. A housing as claimed in any preceding claim, wherein an external ground connection is provided on an outer surface region of the housing, said ground connection being electrically connected to said electrically conductive material.

5. A housing as claimed in any preceding claim, wherein said conductive material comprises a metal, such as brass or stainless steel.

6. A fuel filter for filtering fuel flowing to the fuel system of an internal combustion engine, the fuel filter comprising a housing as claimed in any preceding claim and a filter element contained within the internal chamber thereof.

7. A method of manufacturing a housing for a fuel filter for filtering fuel flowing to the engine of a motor vehicle, the housing comprising a plurality of walls defining an internal chamber for receiving a filter element and having an inlet and an outlet, the method comprising the steps of locating a layer electrically conductive material over a core of a mould, overmoulding an electrically non-conductive material over said electrically conducting material to define at least a portion of the housing, whereby said electrically conducting material is exposed to the chamber over at least a portion of the inner surfaces of the housing.

8. A method as claimed in claim 7, comprising the further step of forming said electrically conductive material into a braid or mesh body dimensioned to fit over said mould core before overmoulding said electrically non-conductive material over said electrically conductive material.

9. A method as claimed in claim 7 or claim 8, comprising the further step of providing an electrical grounding connection on said electrically conductive material arranged to extend through said electrically non-conductive material for connection to a ground wire.
